# EUROPEAN PATENT APPLICATION

(11) **EP 1 251 421 A2**
(43) Date of publication of application: **23.10.2002**
(21) Application number: 02007510.7
(22) Date of filing: 02.04.2002
(51) Int. Cl.: G06F 1/00

(54) **Digital signature verifying method and apparatus**

(30) Priority: 20.04.2001 JP 2001123117
(71) Applicant: Hitachi, Ltd., Chiyoda-ku, Tokyo 101-8010 (JP)
(72) Inventor: Narishima, Yoshitaka, Hitachi, Ltd., 1-chome, Chiyoda-ku, Tokyo 100-8220 (JP); Chiba, Hiroyuki, Hitachi, Ltd., 1-chome, Chiyoda-ku, Tokyo 100-8220 (JP); Nakagami, Shoichi, Hitachi, Ltd., 1-chome, Chiyoda-ku, Tokyo 100-8220 (JP)
(74) Representative: Strehl Schübel-Hopf & Partner

(57) **Abstract**

Generalised, low-cost, and easy digital signature verification techniques for use in information processing operations that require a plurality of digital signatures and series of information processing operations that require a plurality of digital signatures based on the progression of operations. Techniques are provided for verifying signatures on an information processing request, received via a network from a processing application computer, to which multiple digital signatures are to be affixed.

## Description

### Background of the Invention

The present invention relates to verification of digital signatures and more particularly to techniques for verifying a plurality of digital signatures that are to be attached to an information processing request received from an applicant computer via a network.

Japanese laid-open patent publication number 2000-122973 discloses techniques for managing user qualifications where subscribers are provided a service in which user qualifications are verified when the service is used. In this technology, the service provider providing the service issues qualification data to each subscriber that is required for use of services. Examples of services include viewing of predetermined web pages, chat features, and the like. When a subscriber uses the service, a server or other like entity providing the service verifies whether or not the qualification data provided by the subscriber is legitimate. The subscriber can use the services based on contents of the qualification data. Also, a subscriber already having usage qualification can secondarily provide another subscriber with qualification data. In this case, the secondary subscriber is provided with additional data such as a digital signature or cryptographic key of the service provider or of the subscriber already having the qualification data.

In the conventional technology described above, a service provided by a computer is accompanied by usage qualification verification that involves "qualification data" and associated secondary digital signatures, cryptographic keys, and the like. However, digital signatures and the like that are authenticated between the service provider and the subscriber can be passed on to other subscribers such that, from the perspective of the digital signature verification performed by the service or the like providing the service, verification is only performed for a single digital signature. In other words, verification of digital certificates, such as digital signatures, is standardised only for single signatures. Thus, existing technology does not provide a generalised method of verifying digital signatures for data on which a plurality of digital signatures have been attached, or for series of information processing operations on which signatures are applied in steps according to defined processing rules.

Thus, information processing for workflows and application procedures requiring a plurality of digital signatures presently requires operation of separate, dedicated digital signature verification systems for each information processing operation. Since the individual verification systems are set up independently according to specific types of information processing operations, they cannot not be used in a generalised manner, e.g., for other information processing operations and services. Digital signature verification systems must be set up in parallel for each different type of information processing. This increases the overall cost of the systems and lowers the efficiency of the systems. Also, if a subscriber passes qualification data to a third party while keeping legitimate qualifications as in the conventional technology described above, each verification system has to be equipped with a system for processing additional items, e.g., additional data. This further increases the cost of the systems.

In light of the above, there is a need for techniques that overcome the problems described above. It is desirable that the techniques provide a digital signature method that allows a generalised, low-cost, and easy digital signature verification in information processing operations that require a plurality of digital signatures and for series of information processing operations that require a plurality of digital signatures based on the progression of operations.

### Brief Summary of the Invention

The present invention provides generalised, low-cost, and easy digital signature verification techniques for use in information processing operations that require a plurality of digital signatures and series of information processing operations that require a plurality of digital signatures based on the progression of operations. According to an embodiment of the present invention, techniques are provided for verifying signatures on an information processing request, received via a network from a processing application computer, to which multiple digital signatures are to be affixed.

According to an embodiment of the present invention, techniques are provided for verifying signatures for an information processing request, received via a network from a first computer, to which a plurality of digital signatures is to be attached. In this embodiment, a rule descriptor for the information processing request is accessed. The rule descriptor comprises information indicating a plurality of digital signatures to be attached to the information request before executing an information processing application associated with the information processing request. Based upon information included in the rule descriptor information and the information processing request, the present invention determines if the plurality of digital signatures is attached to the information processing request. The information processing application is executed in response to the information processing request if it is determined that the plurality of digital signatures are attached according to information included in the rules descriptor.

Various additional objects, features and advantages of the present invention can be more fully appreciated with reference to the detailed description and accompanying drawings that follow.

### Brief Description of the Drawings

Fig. 1 is a simplified block diagram of a system for performing various verification operations in response to information processing requests (or "applications") associated with rule descriptors according to an embodiment of the present invention;
Fig. 2 depicts a sample data structure for storing information related to a sample rule descriptor according to an embodiment of the present invention;
Fig. 3 depicts a sample data structure for storing information related to application according to an embodiment of the present invention;
Fig. 4 depicts an application selection table data structure according to an embodiment of the present invention;
Fig. 5 is a simplified flow chart showing the main operations performed in a method for verifying digital signatures according to an embodiment of the present invention;
Fig. 6 is a simplified drawing showing a procedure followed when an applicant computer creates a new application and performs application operations for the application according to an embodiment of the present invention; and
Fig. 7 is a simplified drawing showing a procedure followed when an applicant computer gets (acquires) an application and performs application operations for application according to an embodiment of the present invention.

### Detailed Description of the Invention

The present invention provides generalised, low-cost, and easy digital signature verification techniques for use in information processing operations that require a plurality of digital signatures and series of information processing operations that require a plurality of digital signatures based on the progression of operations. According to an embodiment of the present invention, techniques are provided for verifying signatures on an information processing request, received via a network from a processing application computer, to which multiple digital signatures are to be affixed.

According to an embodiment of the present invention, the digital signature verification technique includes checking rules comparing the received information processing request against a rule descriptor indicating a signature requested for an information processing operation associated with the information processing request; and executing an application executing an information processing application in response to the information processing request if the comparison results from the rules comparison step indicates that signatures are affixed according to the rules descriptor.

According to an embodiment of the present invention, when comparing rules, as described above, a rules descriptor recording signature sequence steps in association with digital signatures required for each of the signature sequence steps for the information processing operation is used so that the information processing request is compared for each step in a signature sequence.

According to an embodiment of the present invention, a missing signature is requested from the processing application computer sending the information processing request or a signer for the missing signature if results of a comparison at the rules comparison step indicates that signatures are not affixed as indicated in the rules descriptor. Furthermore, in the digital signature verification technique described above, a step for archiving requests records in appropriate storing means a digital signature originating from the verification server in association with a timestamp based on whether the information processing request needs to be archived, as indicated in the rules descriptor.

Digital signature verification techniques according to the teachings of the present invention may be implemented in a computer to provide a digital signature verification system. The techniques may also be implemented as a program for verifying digital signatures to be executed on a computer. Further, a computer-readable recording medium can store a digital signature verifying program as described above.

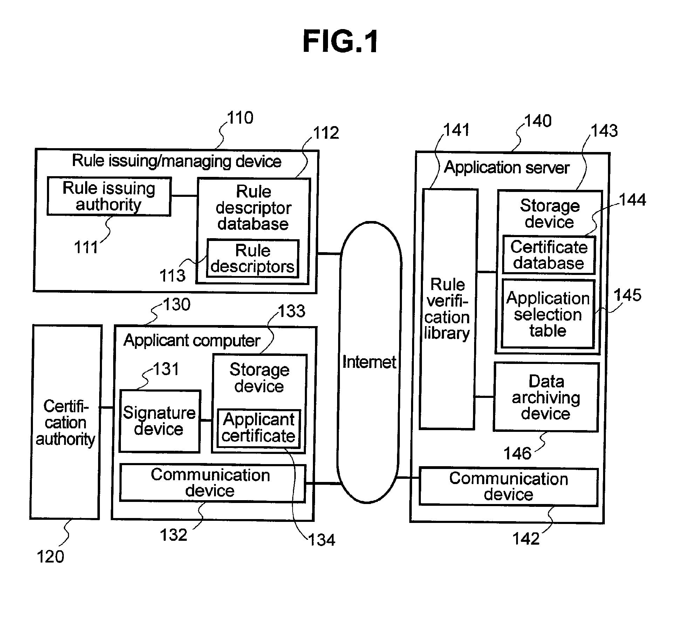

Fig. 1 is a simplified block diagram of a system for performing various verification operations in response to information processing requests (hereinafter referred to as "applications") associated with rule descriptors according to an embodiment of the present invention. In the embodiment depicted in Fig. 1, it is assumed for purposes of describing the invention that an application in the form of an electronic project proposal or a circulated proposal serves as an information processing request. The operations for the application serving as the information processing request are defined using a rules descriptor and verification is performed on digital signatures associated with the application. If the application meets the conditions in the rules descriptor and is accepted as legitimate, then information processing is performed. For example, an information processing application may be executed to provide the company president's approval (such as attaching the president's digital signature) or to process the budget for the project indicated in the application (such as transferring the budget amount in an account).

It should be understood that the present invention can be implemented and used in various different environments. For example, the present invention can be used in the context of a workflow in a firm. For example, the present invention can be implemented and used for workflows relating to various types of certification issuing operations in public institutions such as a workflow for issuing passports, etc. The present invention can also be implemented and used for data or data-flows in which computers pass data back and forth along with a plurality of digital signatures.

The system shown in Fig. 1 comprises: a rule issuing/managing device 110 that is configured to issue and manage rule descriptors 113; a certification authority 120 that is configured to issue digital certificates; an applicant computer 130 that is configured to issue requests for verification of applications; and an application server 140 comprising a rule verification library 141 that performs verification of applications issued by applicant computer 130, a storage device 143, a data archiving device 146, and a communication device 142.

Rule issuing/managing device 110 may comprise a rule issuing authority 111 that may be a computer or the like that has the authority to determine workflows in an organisation such as a firm. Rule issuing authority 111 may be configured to determine processing rules for workflows and to issue and manage these in the form of rule descriptors 113.

It should be understood that the system depicted in Fig. 1 is merely illustrative of an embodiment incorporating the present invention and does not limit the scope of the invention as recited in the claims. One of ordinary skill in the art would recognise other variations, modifications, and alternatives.

The processing rules in rule descriptors 113 are generally set up ahead of time by application type. For example, for applications in the form of circulated proposals, relevant departments view the application and digital signatures are obtained from one or more persons in predetermined positions within each department. Then, when all necessary digital signatures have been collected, the application may be submitted to the president (example of information processing being performed on the information request). Rule descriptors 113, which define the sequence of signature operations, store digital signatures associated with each required signature operation step up to the final execution of the information processing application program. The digital signatures may be stored in a list format.

In alternative embodiments of the present invention, instead of storing information indicating required events that are associated with individual steps in an operation, rule descriptors 113 may store information that indicates the required signatures for an application associated with an information processing operation regardless of the sequence of signatures and the like. In this case, the comparison of rule descriptors 113 and the application is only performed once rather than at each signature step.

According to an embodiment of the present invention, rule descriptors 113 that are issued by rule issuing authority 111 are stored in a rule descriptor database 112. Rule descriptor database 112 can be accessed by users such as members of an organisation such as a firm (e.g., by employees of the firm) via a communication network. The communication network may be the Internet. a wireless network, a switched network, a public network, a local area network (LAN), a wide area network (WAN), an intranet, a private network, or any other network capable of communicating information. Rule descriptor database 112 thus allows rule descriptors 113 to be looked up. Before moving an application forward, the party issuing the application for information processing looks up rule descriptors 113 to determine digital signatures that are required for the application.

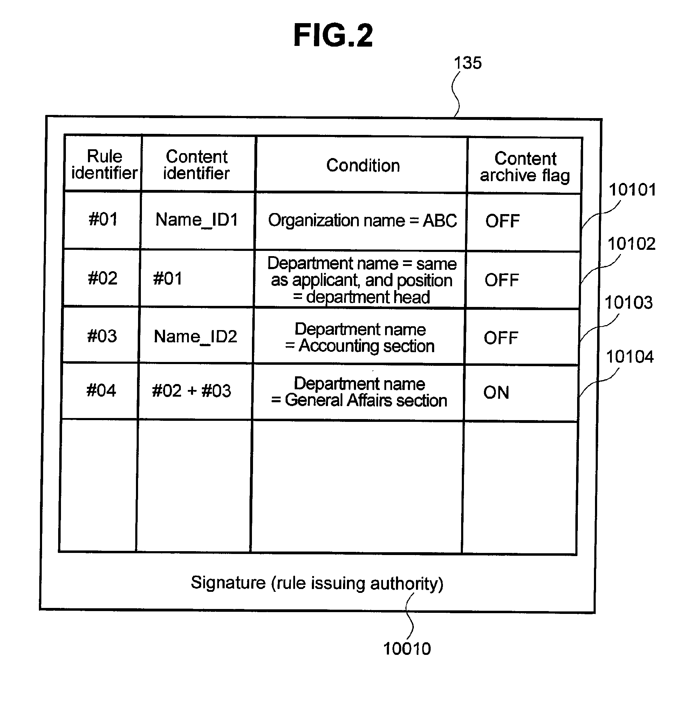

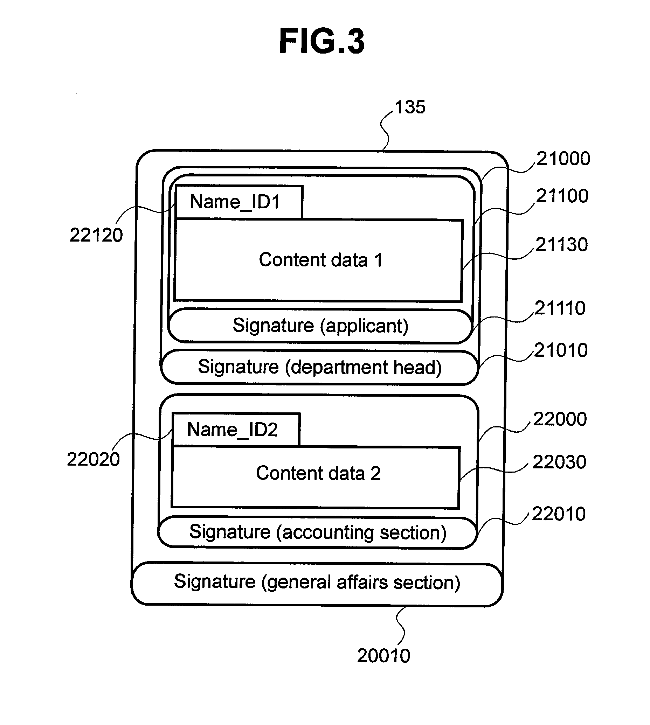

Fig. 2 depicts a sample data structure for storing information related to a sample rule descriptor 113 according to an embodiment of the present invention. Fig. 3 depicts a sample data structure for storing information related to application 135 according to an embodiment of the present invention. The sample rule descriptor 113 shown in Fig. 2 depicts multiple information processing operations with the final information processing operation involving sending a mail containing a budgetary request relating to a business project to the president. Rule descriptor 113 sequentially lists various rules and conditions needed for this and the digital signatures (e.g., digital signatures from the applicant's supervisor and from related departments such as the accounting section and the general affairs section) needed for the rules and conditions. In this example, a rule identifier code is associated with each condition (such as a digital signature) required at a signature step. For example, rule identifiers #01, #02, #03, and #04 are assigned to each signature step (or rule) according to the checking operation sequence.

In the embodiment depicted in Fig. 2, rule descriptor 113 is stored in the form of a relational table. For each rule or signature step, the table depicted in Fig. 2 stores information related to a rule identifier (used as a key), a content identifier, a condition, and a content archive flag. Separate rule descriptors 113 may be prepared for other types of applications such as budget applications, business project proposals, personnel examinations, and the like.

The conditions in rule descriptors 113 are stored in association with the items to be matched against the conditions, i.e., with the content identifiers associated with contents. For example, as shown in Fig. 2 and Fig. 3, for content identifier Name_ID1, the associated condition indicates determining if the organisation's name is ABC. For example, contents of a budget application can be entered by the applicant in the content data 1 (shown in Fig. 3) having Name_ID1 as a tag, and the applicant's digital signature is attached. In addition to content identifier Name_ID1 validated for rule identifier #01 and the digital signature of the applicant, the next rule identifier #02 has as the condition a digital signature from someone for which "the department name is the same as the applicant's" and "the position is department head". Similarly, rule identifiers #03 and #04 contain conditions associated with the indicated content identifiers.

The content archive flag field indicates whether archiving is necessary for an application 135. If archiving is necessary for application 135, then the content archive flag is set for the corresponding rule in rule descriptors 113. The archive flag can be used to indicate that the entire application needs to be archived or, as shown in Fig. 2, can be used to indicate that individual contents need to be archived. Depending on whether the archive flag is set or not, the contents are recorded to a data archiving device 146 (see Fig. 1) in association with a timestamp and a digital signature from application server 140.

Applicant computer 130 can be, for example, a computer within a firm that is used by employees of the firm. The applicant may use applicant computer 130 to access rule descriptor database 112 that may be stored in rule issuing/managing device 110 and look up rule descriptors 113 as well as create an application and submit the application by attaching the applicant's digital signature certified by certification authority 120. According to an embodiment of the present invention, applicant computer 130 includes: a signature device 131 for performing digital signing; a communication device 132 connected to a network; and a storage device 133 storing applications and applicant certificates 134 (e.g., digital signatures and the like).

According to an embodiment of the present invention, application server 140 receives applications from applicant computer 130 via the communication network (e.g., the Internet) and a communication device 142. Application server 140 may also function as a web server for suitable web pages as well as a mail server. Application server 140 can include, for example, a suitable storage device 143 or the like. According to an embodiment of the present invention, storage device 143 contains a certificate database 144 and an application program selection table 145. Certificate database 144 manages public keys and the like that serve as trust anchors for reliable verification of applications received from applicant computer 130. In the embodiment depicted in Fig. 1, certificate database 144 manages digital certificates issued by certification authority 120 and rule issuing authority 111.

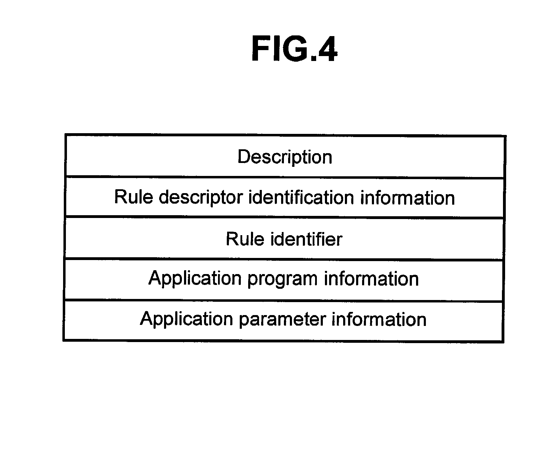

Fig. 4 depicts an application selection table data structure according to an embodiment of the present invention. In the embodiment depicted in Fig. 4, application selection table 145 is embodied as a table comprising: rule descriptor identification information for identifying rule descriptors 113 associated with applications received from applicant computer 130; rule identifiers for rule descriptors 113; application programs activated when the conditions associated with the rule identifiers are met; and application program parameter information indicating execution parameters for the application programs. A data archiving device 146 archives the content data in applications according to the content archive flag in rule descriptors 113, as described above.

Rule verification library 141 checks to see if the conditions indicated in the rule descriptors 113 for the contents of the applications received from the applicant computer 130 are met according to the sequence of rules identified by rule identifiers in the lists in rule descriptors 113. Rule verification library 141 also uses certificate database 144 to evaluate the validity of the digital signatures added to the application and rule descriptors 113. Also, if the contents of the application and the conditions in rule descriptors 113 match, the application selection table 145 (see Fig. 4) is used to retrieve the application program information associated with the rule identifier stored at the time, and an application program is executed based on this application program information and application parameter information.

Rule issuing/managing device 110 and application server 140 may be embodied in a single computer system. The storage devices such as storage device 143, data archiving device 146, and rule descriptor database 112 can be set up as independent storage devices connected to a network, or can be combined in an appropriate manner, or can be unified as a single storage device. Furthermore, while applicant computer 130 can be a standard personal computer, it can also be some other device equipped with a computer chip such as a portable telephone, a PDA, a console game unit, a fax machine, or the like that can be connected to a network. Also, as indicated above, the network connecting rule issuing/managing device 110, applicant computer 130, and application server 140 does not have to be the Internet but can also be a network such as a PC communication connection, a LAN, a wireless network. and the like.

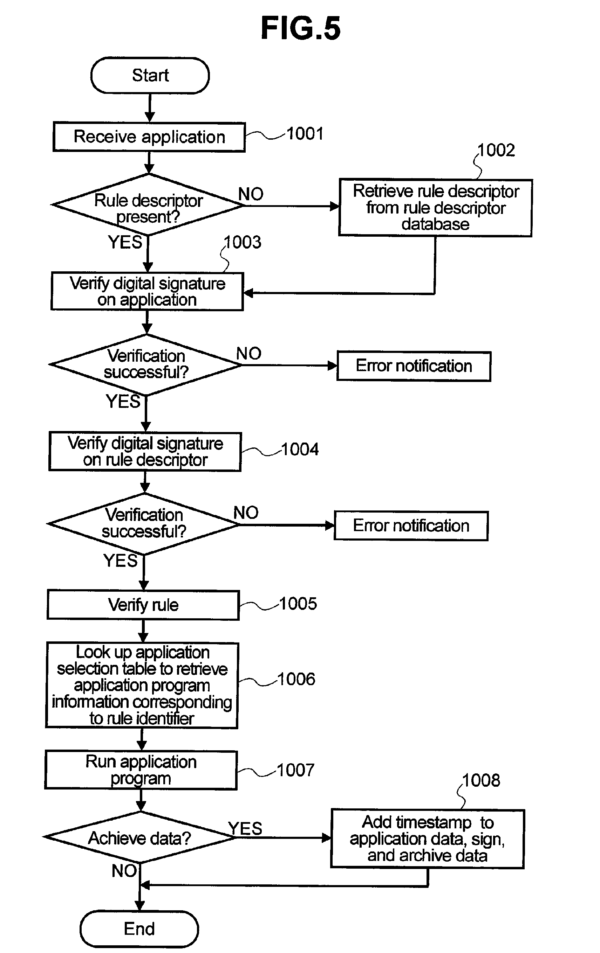

Fig. 5 is a simplified flow chart showing the main operations performed in a method for verifying digital signatures according to an embodiment of the present invention. The flowchart depicted in Fig. 5 is merely illustrative of an embodiment incorporating the present invention and does not limit the scope of the invention as recited in the claims. One of ordinary skill in the art would recognise variations, modifications, and alternatives. According to an embodiment of the present invention, application server 140 performs the processing depicted in Fig. 5. For example, the processing may be performed by software modules executed by a processor of application server 140, hardware module coupled to application server 140, and combinations thereof. In alternative embodiments, the processing may be performed by application server 140 in association with other data processing systems.

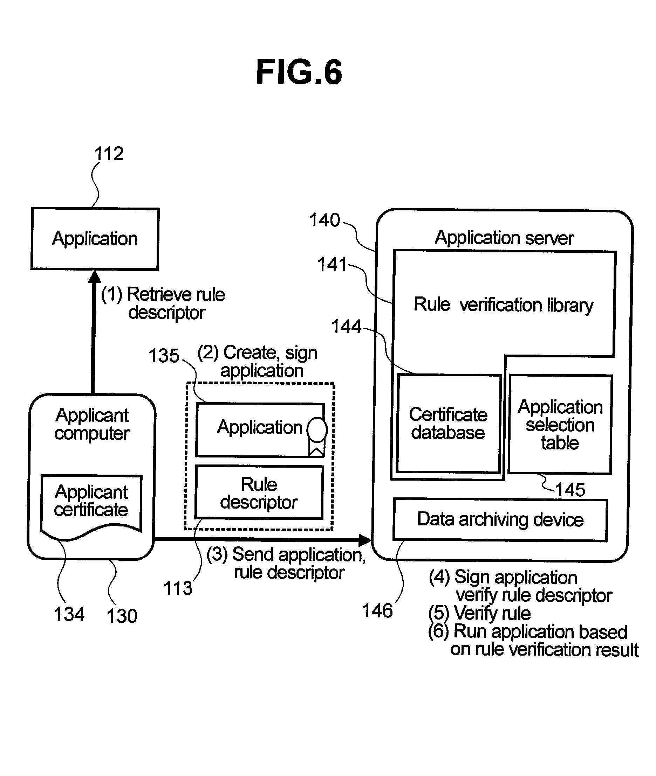

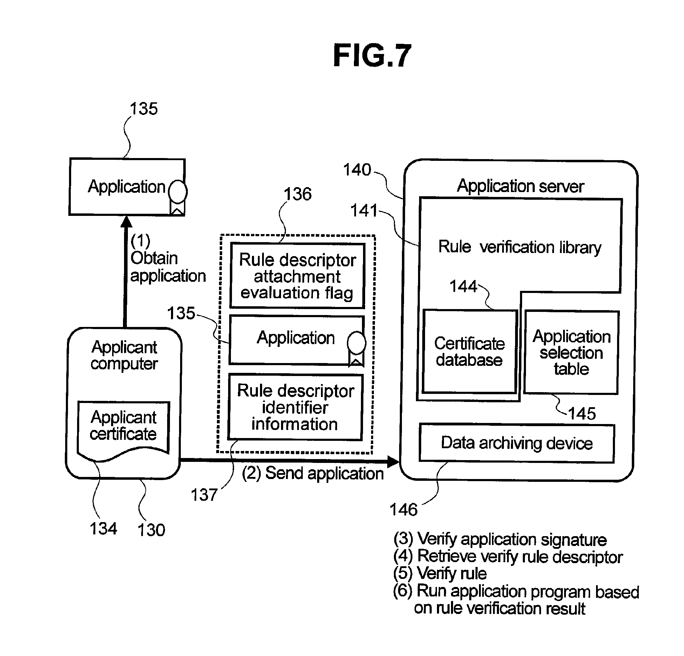

Fig. 6 is a simplified drawing showing a procedure followed when applicant computer 130 creates a new application 135 and performs application operations for the application 135 according to an embodiment of the present invention. Fig. 7 is a simplified drawing showing a procedure followed when applicant computer 130 gets (acquires) an application 135 (that may be previously created) and performs application operations for application 135 according to an embodiment of the present invention. The actual operations performed in the method for verifying digital signatures according to the present invention will be described below.

According to an embodiment of the present invention, applicant computer 130 used by an applicant accesses public rule descriptor database 112 to retrieve rule descriptors 113 associated with the budget approval or the like requested in the application. The applicant extracting a rule descriptors 113 follows the rules in the content identifiers, conditions, and the like in the rule descriptors 113 to prepare application 135 necessary for the application operation or obtains it from rule issuing/managing device 110 or application server 140. The application 135 is then digitally signed using the applicant's certificate issued by certification authority 120. The applicant then sends the application 135 and the rule descriptors 113 from applicant computer 130 used by the applicant to application server 140 for further processing.

Application server 140 receives the application 135 and other information sent by applicant computer 130 (step 1001). Rule verification library 141 then checks for a rule descriptor attachment evaluation flag in the application 135 and checks to see if a rule descriptor 113 was sent along with application 135. The rule descriptor attachment evaluation flag is a flag that indicates whether one or more rule descriptors 113 are sent along with application 135, or whether only rule descriptor identification information indicating which rule descriptor is associated with the application 135 is sent. If the applicant sends application 135 without rule descriptors 113, then rule descriptor identification information 137 is sent along with application 135 such that rule verification library 141 can retrieve and identify the rule descriptor 113 associated with the type of application 135 from rule descriptor database 112.

If no rule descriptor 113 is attached to application 135, the rule descriptor identification information 137 sent along with application 135 is then used to retrieve a rule descriptor 113 associated with application 135 from rule descriptor database 112 (step 1002). Rule verification library 141 obtains the correct rule descriptor 113 associated with application 135 and verifies the applicant's digital signature attached to application 135 using a certificate from certification authority 120, serving as the trust anchor, stored in certificate database 144 (step 1003). Several different techniques known to those skilled in the art may be used for signature verification. For example, according to an embodiment of the present invention, signature verification may be performed using existing public key cryptography signature verification methods. It should be understood that the digital signature and encryption methods used in the present invention are not restricted to public key cryptography methods. Other signature verification methods can also be used according to the level of required security, available computing resources, and the like.

If verification fails, rule verification library 141 notifies applicant computer 130 of an error and processing of the flowchart is terminated. If verification is successful, rule verification library 141 uses the certificate in certificate database 144 for the rule issuing/managing device 110, which serves as the trust anchor, to verify the digital signature of the rule descriptor 113 itself (step 1004). If this verification fails, rule verification library 141 notifies applicant computer 130 of an error and processing of the flowchart is terminated. If the verification results indicate that the digital signatures of application 135 and rule descriptor 113 are legitimate, verification of application 135 is performed based on the rule descriptor 113.

Rule verification library 141 verifies whether, for each rule identifier in the list in the rule descriptor 113, the corresponding conditions are met (step 1005). The verification of the rules identified by rule identifiers is performed according to the sequence of rule identifiers indicated in the rule descriptor 113. For each condition associated with a rule identifier, the contents of application 135 are checked to see if the condition is met or satisfied. For example, considering the rule descriptor 113 and application 135 shown in Fig. 2 and Fig. 3, rule verification library 141 first looks at the rule identified by rule identifier #01 (10101) in rule descriptor 113 and checks the content identifier associated with rule identifier #01 based on the conditions associated with rule identifier #01. As depicted in Fig. 2, content identifier Name_ID1 is associated with rule identifier #01. Accordingly, content identifier Name_ID1 (22120) and the associated content data 1 (21130) from the received application 135 (depicted in Fig. 3) are examined and checked for a digital signature (21110) from the applicant.

Then, attribute information in the applicant certificate 134 (e.g., the source of the applicant's digital signature) and the like are checked to see whether the applicant belongs to an organisation as indicated in the condition associated with rule identifier #01. Rule verification library 141 then examines the next rule in rule descriptor 113 identified by rule identifier #02 (10102) and performs verification using the associated content identifier and condition for application 135. Since the content identifier for rule identifier #02 is #01, the digital signature (21100) of the applicant verified above is the subject of verification. Using "the department name is the same as the applicant's" and "the position is department head" as search keys, the digital signature (21010) data in application 135 is compared with the certificates of the positions corresponding to the conditions as retrieved from certificate database 144. If the signatures from the parties in these positions are not present, application 135 is sent to the corresponding parties or to the applicant with a request for the signatures. Signature verification is then performed on application 135 sent back as a response.

If digital signatures matching the conditions for rule identifier #02 are present, then the rule corresponding to rule identifier #03 (10103) is looked up and verification is performed on application 135 based on the associated content identifiers and conditions. The verification operations performed here are similar to those for the rule identified by rule identifier #01 (10101). The "department name = accounting section" in the condition associated with the rule identified by rule identifier #03 is used as a search key, and a certificate associated with this condition is retrieved from certificate database 144. The content identifier Name_ID2 (22020) and the corresponding content data 2 (22030) in application 135 are checked to see if they have been signed with the certificate. If there is no signature from the accounting section, application 135 is sent to the corresponding accounting section or to the applicant with a request for a signature. Signature verification is then performed for application 135 sent back as a response.

Next, rule verification library 141 looks at the rule identified by rule identifier #04 (10104) and verifies application 135 according to the content identifier and conditions associated with the rule. As depicted in Fig. 2, the content identifier for the rule identified by rule identifier #04 is #02 (10102) + #03 (10103). This indicates that the data to be verified is the data (2100) with the digital signature of the department head from the applicant's department and the data (22000) with the digital signature from the accounting section. The procedure for verifying the corresponding certificate in certificate database 144 is similar to that for the rule identified by rule identifier #03 (10103), although in this case, the condition from the rule identified by rule identifier #04, "department name = general affairs section", is used as the search key to retrieve a certificate. Once the certificate for the "general affairs section" based on the condition in #04 is retrieved, the content identifier #02 (10102) + #03 (10103), i.e., the data (21000) with the applicant's department head's signature, and the data (22000) with the accounting section's signature, is checked to see if a signature using the certificate is attached. If there is no signature from the general affairs section, application 135 is sent to the corresponding general affairs section or to the applicant with a request for a signature. Signature verification is then performed for application 135 sent back as a response.

The verification operation is completed when the digital signature verifications for each of the conditions associated with the rules described above indicates that either the conditions associated with the list of rules in the rule descriptor 113 all matched or that the conditions (one or more) did not match. Based on the rule identifier saved by rule verification library 141 when verification is completed (in this case, #04), application program information associated with the rule identifier is retrieved from application selection table 145 (depicted in Fig. 4) (step 1006), and an application program is executed according to the application program information (step 1007). The executed application program is selected based on the purpose of the information processing operation, e.g., a mailer, a communication application, or the like. Also, rule verification library 141 checks the contents archive flag in the rule descriptor 113. If the flag indicates that archiving is necessary, a timestamp is added to predetermined data of application 135 (this can be the entire application 135 or a section of application 135), a digital signature is applied, and the data is archived in data archiving device 146 (step 1008).

According to another embodiment, the present invention can be implemented recursively. In this embodiment, an application digital signed by the application executed by the digital signature verification method of the present invention can then be processed through the verification device according to a different set of rule descriptors.

Embodiments of the present invention provide several advantages. In applications involving various types of information processing such as electronic applications and workflows, the present invention allows a low-cost and general-purpose digital signature framework to be set up regardless of whether the application is existing or new. By allowing rule descriptors for different information processing operations requiring digital signature verifications to be easily created and managed, a single digital signature verification framework can be used to provide unified handling of digital signature verification for various types of information processing operations. Reliable digital signature processing can be provided easily and in a general-purpose manner, thus leading to easier development of various types of information processing applications involving digital signature verification. Based upon a general-purpose digital signature verification framework provided by embodiments of the present invention, subscribers of growing services (such as electronic filings) to public institutions can use these services in accordance with procedures and terminal environments that are familiar from conventional application methods. Subscribers can use these services without needing to be conscious of the use of a public key cryptography infrastructure, thus promoting widespread use of such a system. It should be understood that the scope of the present invention, as recited in the claims, is not in any way restricted by the advantages described above. Embodiments of the present invention also provided several other advantages in addition to those described above.

It should be apparent that the above description describes only a specific embodiment of the present invention and does not limit the scope of the present invention as recited in the claims. Although specific embodiments of the invention have been described, various modifications, alterations, alternative constructions, and equivalents are also encompassed within the scope of the invention. The described invention is not restricted to operation within certain specific data processing environments, but is free to operate within a plurality of data processing environments. Additionally, although the present invention has been described using a particular series of transactions and steps, it should be apparent to those skilled in the art that the scope of the present invention is not limited to the described series of transactions and steps.

Further, while the present invention has been described using a particular combination of hardware and software, it should be recognised that other combinations of hardware and software are also within the scope of the present invention. The present invention may be implemented only in hardware or only in software or using combinations thereof. A software implementation of the present invention may be a program performing several functions. The program may be stored on a computer-readable medium.

The specification and drawings are, accordingly, to be regarded in an illustrative rather than a restrictive sense. It will, however, be evident that additions, subtractions, deletions, and other modifications and changes may be made thereunto.

## Claims

1. A method of verifying signatures for an information processing request, received via a network from a first computer, to which a plurality of digital signatures is to be attached, the method comprising:
accessing a rule descriptor for the information processing request, the rule descriptor comprising information indicating a plurality of digital signatures to be attached to the information request before executing an information processing application associated with the information processing request;
determining, based upon information included in the rule descriptor information and the information processing request, if the plurality of digital signatures is attached to the information processing request; and
executing the information processing application in response to the information processing request if it is determined that the plurality of digital signatures is attached according to information included in the rules descriptor.

2. The method of claim 1 further comprising, if it is determined that a first digital signature from the plurality of signatures is not attached to the information processing request, requesting the first digital signature from the first computer.

3. The method of claim 1 further comprising, if it is determined that a first digital signature from the plurality of digital signatures is not attached to the information processing request, requesting the first digital signature from a signer associated with the first digital signature.

4. The method of claim 1 wherein:
the rule descriptor comprises information identifying a sequence of steps and one or more digital signatures associated with each step; and
determining if the plurality of digital signatures is attached to the information processing request comprises determining, for each step, if the one or more digital signatures associated with the step are attached to the information processing request.

5. The method of claim 4 wherein determining, for each step, if the one or more digital signatures associated with the step are attached to the information processing request comprises determining if a condition associated with the step is satisfied.

6. The method of claim 1 wherein accessing the rule descriptor for the information processing request comprises:
reading rule descriptor identification information from the information processing request; and
identifying the rule descriptor based upon the rule descriptor identification information.

7. The method of claim 1 wherein the rule descriptor is received from the first system along with the information processing request.

8. The method of claim 1 further comprising, if information in the rules descriptor indicates that information included in the information processing request is to be archived, archiving the information processing request along with a timestamp and a digital signature originating from a system performing signature verification for the information processing request.

9. A system for verifying digital signatures for an information processing request to which a plurality of digital signatures is to be attached, the system comprising:
a processor;
a memory configured to store a plurality of code modules for execution by the processor, the plurality of code modules comprising:
a code module for receiving the information processing request from a first computer;
a code module for accessing a rule descriptor for the information processing request, the rule descriptor comprising information indicating a plurality of digital signatures to be attached to the information request before executing an information processing application associated with the information processing request;
a code module for determining, based upon information included in the rule descriptor information and the information processing request, if the plurality of digital signatures is attached to the information processing request; and
a code module for executing the information processing application in response to the information processing request if it is determined that the plurality of digital signatures is attached according to information included in the rules descriptor.

10. The system of claim 9 wherein the plurality of code modules comprises a code module for requesting the first digital signature from the first computer if it is determined that a first digital signature from the plurality of signatures is not attached to the information processing request.

11. The system of claim 9 wherein the plurality of code modules comprises a code module for requesting the first digital signature from a signer associated with the first digital signature if it is determined that a first digital signature from the plurality of digital signatures is not attached to the information processing request.

12. The system of claim 9 wherein:
the rule descriptor is a data structure comprising information identifying a sequence of steps and one or more digital signatures associated with each step; and
the code module for determining if the plurality of digital signatures is attached to the information processing request comprises a code module for determining, for each step, if the one or more digital signatures associated with the step are attached to the information processing request.

13. The system of claim 12 wherein the code module for determining, for each step, if the one or more digital signatures associated with the step are attached to the information processing request comprises a code module for determining if a condition associated with the step is satisfied.

14. The system of claim 9 wherein the code module for accessing the rule descriptor for the information processing request comprises:
a code module for reading rule descriptor identification information from the information processing request; and
a code module for identifying the rule descriptor based upon the rule descriptor identification information.

15. The system of claim 6 wherein the rule descriptor is received from the first system along with the information processing request.

16. The system of claim 9 wherein the plurality of code modules comprises a code module for archiving the information processing request along with a timestamp and a digital signature originating from a system performing signature verification for the information processing request if information in the rules descriptor indicates that information included in the information processing request is to be archived.

17. A system for verifying signatures for an information processing request to which a plurality of digital signatures is to be attached, the system comprising:
means for receiving the information processing request from a first system;
means for accessing a rule descriptor for the information processing request, the rule descriptor comprising information indicating a plurality of digital signatures to be attached to the information request before executing an information processing application associated with the information processing request;
means for determining, based upon information included in the rule descriptor information and the information processing request, if the plurality of digital signatures is attached to the information processing request; and
means for executing the information processing application in response to the information processing request if it is determined that the plurality of digital signatures is attached according to information included in the rules descriptor.

18. A computer program product stored on a computer readable storage medium for verifying signatures for an information processing request, received from a first system, to which a plurality of digital signatures is to be attached, the computer program product comprising:
code for accessing a rule descriptor for the information processing request, the rule descriptor comprising information indicating a plurality of digital signatures to be attached to the information request before executing an information processing application associated with the information processing request;
code for determining, based upon information included in the rule descriptor information and the information processing request, if the plurality of digital signatures is attached to the information processing request; and
code for executing the information processing application in response to the information processing request if it is determined that the plurality of digital signatures is attached according to information included in the rules descriptor.

19. The computer program product of claim 18 wherein:
the rule descriptor is a data structure comprising information identifying a sequence of steps and one or more digital signatures associated with each step; and
the code for determining if the plurality of digital signatures is attached to the information processing request comprises code for determining, for each step, if the one or more digital signatures associated with the step are attached to the information processing request.

20. The computer program product of claim 18 further comprising code for requesting the first digital signature from the first computer or from a signer associated with the first digital signature if it is determined that a first digital signature from the plurality of signatures is not attached to the information processing request.
